# EUROPÄISCHE PATENTSCHRIFT

(11) **EP 0 883 527 B1**
(45) Veröffentlichungstag und Bekanntmachung des Hinweises auf die Patenterteilung: **13.10.1999**
(21) Anmeldenummer: 97915313.7
(22) Anmeldetag: 27.02.1997
(51) Int. Cl.: B60R 21/32

(54) **ANORDNUNG ZUM STEUERN EINES RÜCKHALTEMODULS, INSBESONDERE FÜR EIN KRAFTFAHRZEUG**
CONTROL SYSTEM FOR A RESTRAINING DEVICE, PARTICULARLY IN A MOTOR VEHICLE
SYSTEME DE COMMANDE D'UN DISPOSITIF DE RETENUE, NOTAMMENT DANS UN VEHICULE A MOTEUR

(30) Priorität: 08.03.1996 DE 19609079
(43) Veröffentlichungstag der Anmeldung: 16.12.1998
(73) Patentinhaber: SIEMENS AKTIENGESELLSCHAFT, 80333 München (DE)
(72) Erfinder: SCHMID, Gerhard, D-93049 Regensburg (DE); BAUMGARTNER, Walter, D-93197 Zeitlarn (DE); KÖPPL, Michael, D-93161 Sinzing (DE); HERMANN, Stefan, D-93096 Köfering (DE)
(86) Internationale Anmeldenummer: DE9700353
(87) Internationale Veröffentlichungsnummer: WO9732757

(56) Entgegenhaltungen:
- EP-A- 0 283 737
- EP-A- 0 531 989
- WO-A-89/09146
- WO-A-90/02672

## Beschreibung

Die Erfindung betrifft eine Anordnung zum Steuern eines Rückhaltemittels wie z.B. Airbag, Gurtstraffer, usw., insbesondere für ein Kraftfahrzeug, gemäß Oberbegriff von Patentanspruch 1.

Gemäß Figur 6 wird in der Druckschrift US 5,544,915 eine Anordnung vorgeschlagen, die eine etwa am Fahrzeugtunnel angeordnete Zentralanordnung aufweist mit einem mit einer Energiequelle 101 verbundenen Zündkreis, mit einer ersten Steuereinheit 1 in Form eines Mikroprozessors, und mit einer Schnittstelle 103 zur Datenübertragung. Ein dem Zündkreis zugeordnetes aber nicht in der Zentralordnung 10 angeordnetes Zündelement 100 ist über Leitungen in den Zündkreis eingebunden. Die Schnittstelle 103 der Zentralanordnung 10 ist über ein Mittel zur Datenübertragung 102, vorzugsweise einer Leitung, mit einer entsprechenden Schnittstelle 103 einer in einem Fahrzeugseitenteil angeordneten Aufprallerkennungsanordnung 20 verbunden. Die Aufprallerkennungsanordnung 20 weist ferner einen Beschleunigungssensor 5 und eine weitere Steuereinheit 3 auf.

Diese Anordnung dient dazu, einen Seitenaufprall mittels des Fahrzeugquerbeschleunigungen aufnehmenden Beschleunigungssensors 5 zu erkennen und daraufhin gegebenenfalls das dem Zündelement 100 zugeordnete Rückhaltemittel zum Seitenaufprallschutz aufzulösen. Der Beschleunigungssensor 5 liefert ein Beschleunigungssignal g1 an die weitere Steuereinheit 3, in der das Beschleunigungssignal g1 mit mehreren Schwellwerten verglichen wird. Überschreitet die Beschleunigung g1 einen der vorgegebenen Schwellwerte, so wird ein Signal a1 über das Übertragungsmittel 102 und die zugehörigen Schnittstellen 103 an die erste Steuereinheit 1 übermittelt. Das von der weiteren Steuereinheit 3 gewöhnlich binär codierte Signal a1 wird in der ersten Steuereinheit 1 decodiert. Ein in der Zentralanordnung 10 angebrachter weiterer Beschleunigungssensor 6 liefert ein weiteres Beschleunigungssignal g2 an die erste Steuereinheit 1. Übersteigt die weitere Beschleunigung g2 einen ihr zugeordneten Schwellwert und liegt gleichzeitig das Signal a1 der Aufprallerkennungsanordnung 20 vor, so wird durch die erste Steuereinheit 1 der Zündkreis derart angesteuert, daß das Zündelement 100 mit Energie beaufschlagt und dadurch das zugeordnete Rückhaltemittel ausgelöst wird.

Weist die erste Steuereinheit 1 einen Defekt auf, so besteht die Gefahr, daß von ihr ein Steuersignal zum Auslösen des Zündelements ausgegeben wird ohne daß ein Aufprall erfolgt, wodurch eine erhebliche Gefährdung des Insassen und überdies unnötige Austauschkosten des benutzten Airbags entstehen. Diese Anordnung weist damit geringe Vorkehrungen zum Vermeiden einer Fehlauslösung auf.

Bei einer bekannten Anordnung gemäß US 5,182,459 verarbeitet ein Mikrocomputer die Beschleunigungssignale zweier Beschleunigungssensoren. Wird ein Aufprall erkannt, so werden durch den Mikrocomputer zwei Leistungsschalter im Zündkreis durchgeschaltet, so daß das zwischen den Leistungsschaltern angeordnete Zündelement mit Energie einer Energiequelle beaufschlagt wird. Jeder Leistungstransistor im Zündkreis ist mit Je einem Ausgang des Mikrocomputers verbunden. Die Leistungstransistoren sind dabei derart ausgelegt, daß der eine Leistungstransistor zum Durchsteuern eine logische Eins am Ausgang des Mikrocomputers benötigt, der andere Leistungstransistor eine logische Null. Wird der Chip des Mikrocomputers aufgrund großer Hitze oder mechanischer Einwirkung weitgehend zerstört, so liefern mit hoher Wahrscheinlichkeit entweder alle seine Ausgänge eine logische Eins oder alle seine Ausgänge eine logische Null. Durch die für das Zünden erforderliche gegenphasige Ansteuerung der Leistungsschalter wird bei einer grundliegenden Beeinträchtigung des Mikrocomputers eine Fehlauslösung verhindert.

Eine Fehlauslösung erfolgt dennoch dann, wenn die Mikrocomputer-Funktionalität fehlerbehaftet ist, z.B. Bearbeitungsroutinen für die Beschleunigungssignale fehlerbehaftet sind.

Aus der DE 40 16 644 A1 ist eine Anordnung bekannt, bei der ein Mikrocomputer das Signal eines Beschleunigungssensors auswertet und bei Bedarf einen elektrisch steuerbaren Leistungsschalter im Zündkreis durchschaltet. Ein weiteres Beschleunigungssignal eines weiteren Beschleunigungssensors wird in einer analog ausgebildeten Steuereinheit bewertet. Die analog ausgebildete Steuereinheit steuert einen zweiten elektrisch steuerbaren Leistungsschalter im Zündkreis durch, sofern von ihr eine Mindestbeschleunigung des Fahrzeugs erkannt wird. Ein Zündelement ist zwischen den beiden Leistungsschaltern angeordnet und wird mit Energie beaufschlagt, sofern beide Leistungsschalter durchgesteuert sind.

Eine solche Anordnung hat den Nachteil, daß bei einer groben Fehlfunktion bzw. Zerstörung des Mikrocomputers der erste Leistungsschalter fehlerhaft geschlossen wird und aufgrund der im analogen Schaltkreis gering ausgebildeten Schwelle bereits ein Beschleunigungssignal geringer Amplitude ausreicht - hervorgerufen z.B. durch das Überfahren eines Randsteins -, so daß das Zündelement ausgelöst wird.

Aus der Druckschrift US 5,283,472 ist eine Anordnung mit einem Mikrocomputer bekannt, der die Signale zweier Beschleunigungssensoren verarbeitet. Über zwei seiner Ausgänge steuert der Mikrocomputer zwei elektrisch steuerbare Leistungsschalter eines Zündkreises. Ferner enthält der Zündkreis einen mechanischen Beschleunigungsschalter, der unter Einwirkung einer Mindestbeschleunigung schließt.

Nachteil dieser Anordnung ist es, daß derzeit verfügbare mechanische Beschleunigungsschalter lange Schließzeiten aufweisen und damit zum Erkennen eines Seitenaufpralls eines Kraftfahrzeugs nicht geeignet sind.

Aus der gattungsbildenden Druckschrift EP 0 283 737 ist eine Anordnung zum Steuern eines Rückhaltemittels für ein Kraftfahrzeug bekannt, bei der von Verzögerungssensoren gesteuerte Schalter über eine Energiequelle drei Steuereinheiten aktivieren. Jede Steuereinheit steuert wiederum eine zugeorndete steuerbare Leistungsstufe im Zündkreis. Damit wird das zugeorndete Zündelement nur dann ausgelöst, wenn alle drei steuerbaren Leistungsstufen leitend geschaltet sind. Diese bekannte Anordnung ist aufwendig in ihrer Herstellung und bauteileintensiv.

Aufgabe der Erfindung ist es, die Nachteile der bekannten Anordnungen zu vermeiden, und insbesondere eine Anordnung zu schaffen, die höchst zuverlässig vor Fehlauslösungen des Zündelements schützt und andererseits bei Bedarf sicher und rechtzeitig auslöst.

Die Aufgabe wird erfindungsgemäß gelöst durch die Merkmale des Patentanspruchs 1. Dabei ist im Zündkreis ein dritter elektrisch steuerbarer Leistungsschalter angeordnet, der durch eine zweite Steuereinheit beschleunigungsabhängig gesteuert wird. Lediglich bei entsprechender Durchsteuerung aller drei steuerbaren Leistungsschalter im Zündkreis wird dem Zündelement Energie aus der Energiequelle zugeführt.

Dabei sind der erste und der zweite Leistungsschalter auf einem gemeinsamen Träger, insbesondere als integrierter Schaltkreis mit Testlogik, ausgebildet. Der dritte Leistungsschalter ist nicht auf diesem Träger angeordnet.

Durch die Erfindung wird in vorteilhafter Weise eine Fehlauslösung verhindert. Sollte die erste Steuereinheit einen Defekt aufweisen und die ihr zugeordneten Leistungsschalter durchsteuern, so wird durch den dritten Leistungsschalter, der von der zweiten Steuereinheit bedient wird, ein Zünden des Zündelements wirksam verhindert. Durch die ausschließliche Verwendung von elektrisch steuerbaren Leistungsschaltern im Zündkreis wird zudem eine ausreichende Stromtragfähigkeit bei geringer räumlicher Ausdehnung erreicht. Diese Stromtragfähigkeit kann beim Einsatz von mechanischen Beschleunigungsschaltern im Zündkreis gegebenenfalls nur durch große Abmessungen erreicht werden. Ferner verhindern die durch die erste Steuereinheit bedienbaren Leistungsschalter eine Fehlauslösung bei defektem dritten Leistungsschalter bzw. defektem zweiter Steuereinheit. Mit der erfindungsgemäßen Anordnung wird unter Berücksichtigung eines optimierten Aufwands an Steuergliedern und Leistungsbauelementen eine höchst zuverlässige Anordnung, insbesondere zum Seitenaufprallschutz, geschaffen, die Fehlauslösungen weitgehend vermeidet.

Aufgrund des geringen Aufwands bei der Herstellung sind die durch die erste Steuereinheit steuerbaren Leistungsschalter auf einem gemeinsamen Träger angeordnet. Der Aufwand für die Leitungsführung und der zu treibende Herstellungsaufwand wird dadurch gering gehalten, insbesondere, da die beiden Leistungsschalter durch eine gemeinsame Steuereinheit bedient werden. Die Anordnung des dritte steuerbaren Leistungsschalters des Zündkreises auf einem separaten Träger ist aus folgenden Gründen außerordentlich vorteilhaft: Bei einem Trägerdefekt - hier ist insbesondere an Störfälle von als integrierten Schaltkreisen ausgebildeten Trägern gedacht - können die auf dem Träger befindlichen Leistungsschalter leitend bzw kurzgeschlossen sein. Erfindungsgemäß darf in einem solchen Störfall nicht auch der dritte Leistungsschalter beeinträchtigt werden, sodaß durch ein fehlerhaftes Durchsteuern aller drei Leistungsschalter eine Fehlauslösung bewirkt wird. Ist dagegen der dritte Leistungsschalter in seiner Hardware physikalisch getrennt von den anderen beiden Leistungsschaltern angeordnet, wird diese Fehlauslösung verhindert.

Vorteilhafterweise sind dann zweite Steuereinheit und dritter Leistungsschalter gemeinsam als integrierter Schaltkreis ausgebildet, so daß bei der Herstellung der Anordnung der Aufwand gering gehalten werden kann.

Insbesondere ist es vorteilhaft, erste und zweite Steuereinheit in ihrer Hardware voneinander zu trennen, so daß eine fehlerhafte Schaltungsanordnung der ersten Steuereinheit nicht die Funktionstüchtigkeit der zweiten Steuereinheit beeinträchtigt und umgekehrt. Damit weisen als vorteilhafte Weiterbildung auch die Steuereinheiten physikalisch voneinander getrennte Schaltungsträger auf. Dabei ist insbesondere die erste Steuereinheit als Mikroprozessor ausgebildet, die zweite Steuereinheit als analoge oder logische Schaltungsanordnung.

Zum beschleunigungsabhängigen Steuern des dritten Leistungsschalters wird der zweiten Steuereinheit ein Beschleunigungssignal zugeführt. Dieses Beschleunigungssignal ist entweder das Beschleunigungssignal des Beschleunigungssensors, der auch die erste Steuereinheit mit seinem Signal bedient. Der Gesamtaufwand der Anordnung kann damit gering gehalten werden, wenn z.B. dieser Beschleunigungssensor durch Testroutinen permanent auf seine Funktionsfähigkeit hin überprüft wird.

Andererseits kann ein weiterer Beschleunigungssensor ein weiteres Beschleunigungssignal an die zweite Steuereinheit liefern. Damit weist die Anordnung zwei voneinander völlig unabhängige Auslösepfade mit jeweils einem Beschleunigungssensor, einer Steuereinheit und mindestens einem Leistungsschalter auf, so daß eine Fehlauslösung höchst unwahrscheinlich ist.

Weitere vorteilhafte Weiterbildungen der Erfindung sind in den Unteransprüchen gekennzeichnet. Es wird insbesondere auf die Weiterbildungen in den Unteransprüchen 8 bis 13 verwiesen, bei deren Anordnung der Beschleunigungssensor entfernt von der ersten Steuereinheit angeordnet ist, und die damit insbesondere bei der Seitenaufprallerkennung Anwendung finden.

Die Erfindung und ihre Weiterbildungen werden anhand der Figuren 1 bis 5 näher erläutert. Es zeigen:
- Figuren 1 bis 3:: Erfindungsgemäße Anordnungen,
- Figur 4:: Einen Schaltungsausschnitt einer erfindungsgemäßen Anordnung, und
- Figur 5:: Die erfindungsgemäße Anordnung in einem Fahrzeug.

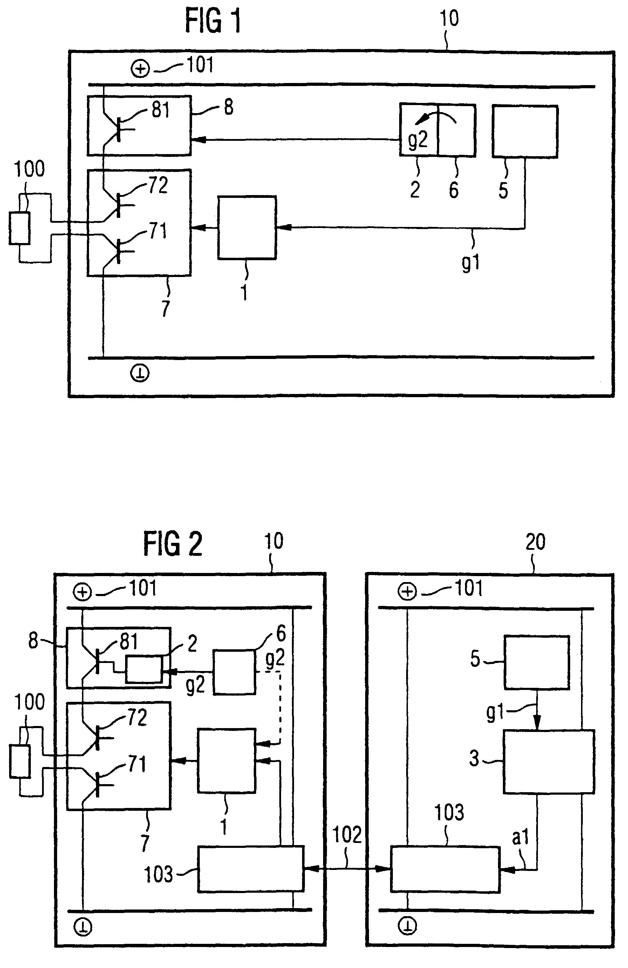

Figur 1 zeigt eine erfindungsgemäße Anordnung. Aufgrund Ihrer etwa zentralen Lage im Fahrzeug, beispielsweise in der Nähe des Fahrzeugtunnels oder des Armaturenbretts, handelt es sich um eine Zentralanordnung 10. Vorzugsweise sind alle Bauelemente der Zentralanordnung 10 in einem gemeinsamen Gehäuse angeordnet und bilden damit ein Steuergerät. Die Anordnung nach Figur 1 wird insbesondere zur Auslösung von Rückhaltemitteln zum Front- oder Schrägaufprallschutz eingesetzt, kann aber ggf. auch zum Seitenaufprallschutz verwendet werden. Die Zentralanordnung 10 enthält eine Energieversorgung 101, gekennzeichnet durch eine Versorgungsleitung mit positiver Versorgungsspannung und eine auf Masse oder negativem Potential liegende zweite Versorgungsleitung. Ein Beschleunigungssignal g1 eines Beschleunigungssensors 5 - zur Frontaufprallerkennung gibt dieses Beschleunigungssignal g1 die Beschleunigung des Fahrzeugs in Richtung der Fahrzeuglängsachse wieder - wird an eine erste Steuereinheit 1 geliefert, welche durch die Energiequelle 101 versorgt wird. Die erste Steuereinheit 1 ist vorzugsweise als Mikroprozessor ausgebildet und verarbeitet das analoge Beschleunigungssignal g1, integriert und vergleicht es beispielsweise mit einem Schwellwert. Wird infolge der Verarbeitung des Beschleunigungssignals g1 von der ersten Steuereinheit 1 erkannt, daß ein für ein Auslösen des Rückhaltemittels genügend starker Aufprall vorliegt so werden ein erster Leistungsschalter 71 und ein zweiter Leistungsschalter 72 in einem Zündkreis der Anordnung durchgeschaltet. Der Zündkreis der Anordnung ist mit der Energieversorgung 101 verbunden und weist in Serie zueinander zunächst den ersten Leistungsschalter 71, das dem Rückhaltemittel zugeordnete Zündelement 100 und den zweiten Leistungsschalter 72 auf. Das Zündelement 100 ist dabei über Leitungen mit der Zentralanordnung 10 elektrisch verbunden. Zusätzlich ist ein weiterer Beschleunigungssensor 6 vorgesehen, welcher ein weiteres analoges Beschleunigungssignal g2 an eine zweite Steuereinheit 2 liefert. In der zweiten Steuereinheit 2 wird das weitere Beschleunigungssignal g2 ausgewertet. Wird von der zweiten Steuereinheit 2 ein Aufprall erkannt, wobei die Auslöseanforderungen und damit insbesondere ein Schwellwert für das weitere Beschleunigungssignal g2 niedriger angesetzt sind als beim ersten Beschleunigungssignal g1, so wird ein dritter Leistungsschalter 81 des Zündkreises durch die zweite Steuereinheit 2 durchgeschaltet. Dieser dritte Leistungsschalter 81 ist in Serie zu den ersten beiden Leistungsschaltern 71 und 72 sowie dem Zündelement 100 angeordnet. Erst wenn alle Leistungsschalter 71, 72 und 81 durch die entsprechenden Steuereinheiten 1 und 2 durchgeschaltet sind, wird dem Zündelement 100 durch die Energiequelle 101 zum Zünden ausreichende Energie zugeführt.

Der erste und der zweite elektrisch steuerbare Leistungsschalter 71 und 72 sind auf einem gemeinsamen Träger 7 angeordnet, vorzugsweise als integrierte Schaltung auf einem Silizium-Substrat. Der dritte steuerbare Leistungsschalter 81 ist auf einem weiteren Träger 8 angeordnet, ebenfalls vorzugsweise auf einem Silizium-Substrat. Der dritte Leistungsschalter 81 kann aber auch diskret als Endstufen-Transistor ausgebildet sein.

Ein jeder der beiden Leistungsschalter 71 und 72 wird vorzugsweise durch einen eigenen Ausgang des Mikroprozessors bzw. der ersten Steuereinheit 1 bedient. Dabei sind die Leistungstransistoren 71 und 72 in ihrem physikalischen Aufbau derart ausgebildet, daß sie gegenphasig angesteuert werden müssen, um durchzuschalten. So wird beispielsweise der erste Leistungsschalter 71 durch eine logische 1 am zugeordneten Ausgang des Mikroprozessors 1 leitend, der zweite Leistungsschalter 72 dagegen mit einer logischen Null am zugeordneten Ausgang des Mikroprozessors 1. Somit wird verhindert, daß bei einem Defekt des Mikroprozessors 1 das Zündelement 100 gezündet wird, da die Ausgänge bei defektem Schaltungsträger der ersten Steuereinheit 1 bevorzugt mit gleichartigen Signalen, also entweder einer Eins oder einer Null bedient sind. Über den dritten Leistungsschalter 81 wird sichergestellt, daß eine Fehlauslösung verhindert wird, wenn der Auswertealgorithmus der ersten Steuereinheit 1 fehlerhafterweise ein von dem Beschleunigungssensor 5 geliefertes schwaches Beschleunigungssignal in einen Auslösebefehl umsetzt.

Mit der erfindungsgemäßen Anordnung nach Figur 1 werden weder bei vorgenannten Fehlerfällen noch bei folgend genannten Fehlerfällen Fehlauslösungen eingeleitet:
- Defekt eines der Beschleunigungssensoren 5 oder 6,
- Defekt einer der Steuereinheiten 1 oder 2,
- Defekt einer der Steuereinheiten 1 oder 2 bezüglich der Auswertung der gelieferten Beschleunigungssignale,
- Defekt von höchstens zwei der drei Leistungsschalter 71, 72 und 81.

Die zweite Steuereinheit 2 kann anstelle des weiteren Beschleunigungssensors 6 auch mit dem Beschleunigungssensor 5 verbunden werden und dessen Beschleunigungssignale g1 verarbeiten.

Figur 2 zeigt eine Anordnung, die vorzugsweise zur Seitenaufprallerkennung und zum Auslösen der entsprechenden Rückhaltemittel verwendet wird. Dabei ist der Beschleunigungssensor 5 in einer dezentral, beispielsweise in einem Fahrzeugseitenteil, angeordneten Aufprallerkennungsanordnung 20 angeordnet. Eine dritte Steuereinheit 3, ebenfalls zugehörig zur Aufprallerkennungsanordnung 20, wertet das Beschleunigungssignal g1 aus und liefert Auswerteergebnisse in Form eines Signals a1 an die Zentralanordnung 10. Die Datenübertragung zwischen Aufprallerkennungsanordnung 20 und Zentralanordnung 10 erfolgt über je eine Schnittstelle 103 und eine Leitung 102 zur Übermittlung codierter Datensignale. Üblicherweise wird in der dritten Steuereinheit 3 das zu übermittelnde Signal 1 codiert und in der ersten Steuereinheit 1 der Zentralanordnung 10 wiederum decodiert. In der ersten Steuereinheit 1 der Zentralanordnung 10 kann eine weitere Bewertung des übermittelten Signals a1 erfolgen. Alternativ können die vom Beschleunigungssensor 5 gelieferten Beschleunigungssignale g1 in der dritten Steuereinheit 3 lediglich analog-digital gewandelt und codiert werden, so daß eine vollständige Bewertung der Beschleunigungssignale g1 in der ersten Steuereinheit 1 der Zentralanordnung 10 erfolgt.

Der weitere Beschleunigungssensor 6 ist in der Zentralanordnung 10 angeordnet. Sein weiteres Beschleunigungssignal g2 wird in der zweiten Steuereinheit 2 ausgewertet, welche wiederum den dritten Leistungsschalter 81 steuert. Unterschiedlich zur Anordnung gemäß Figur 1 ist die zweite Steuereinheit 2 in Figur 2 zusammen mit dem dritten Leistungsschalter 81 auf einem gemeinsamen Träger 8 angeordnet. Auf diesem Träger 8 kann auch der weitere Beschleunigungsschalter 6 in mikromechanischer Technik angeordnet sein, was den Herstellungsaufwand weiter mindert. Ein Auslösen des Zündelements 100 erfolgt nach der in der zu Figur 1 beschriebenen Methode. Zur Erhöhung der Zuverlässigkeit kann das vom zweiten Beschleunigungssensor 6 gelieferte weitere Beschleunigungssignal g2 ggf. auch in der ersten Steuereinheit 1 zusätzlich überprüft bzw. verarbeitet werden.

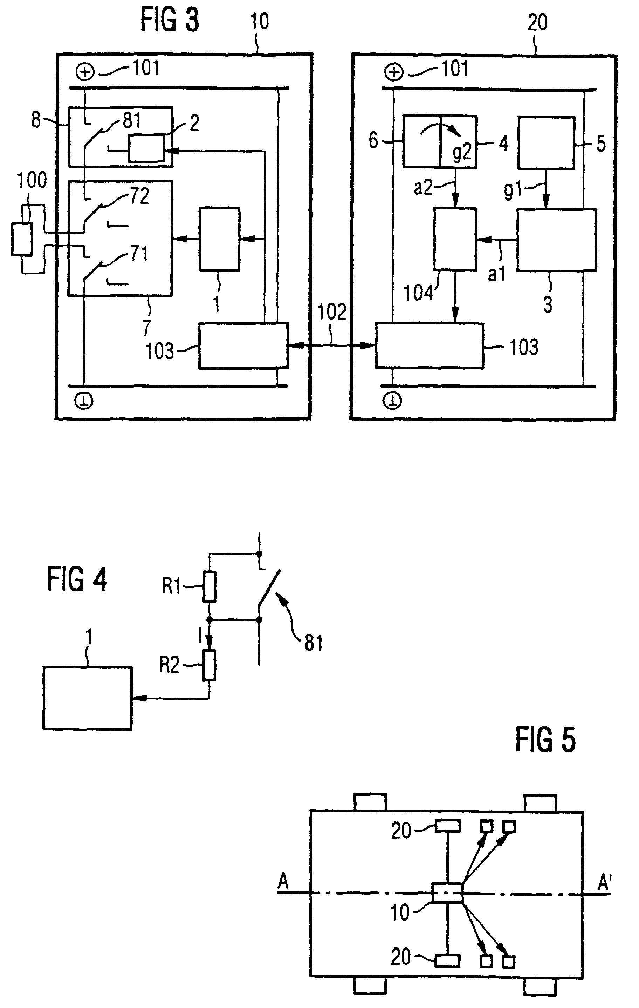

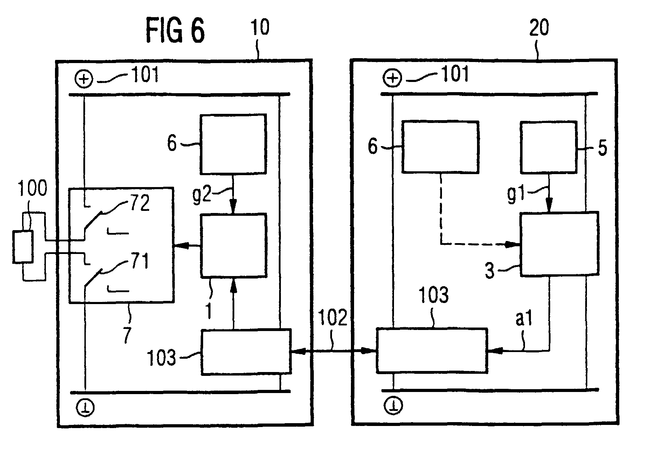

Gemäß einer weiteren erfindungsgemäßen Anordnung gemäß Figur 3 sind sowohl Beschleunigungssensor 5 als auch weiterer Beschleunigungssensor 6 in der Aufprallerkennungsanordnung 20 angeordnet. Dementsprechend weist die Aufprallerkennungsanordnung 20 nicht nur eine dritte Steuereinheit 3 für das Beschleunigungssignal g1, sondern auch eine vierte Steuereinheit 4 für das weitere Beschleunigungssignal g2 auf, wobei dritte und vierte Steuereinheit 3 und 4 vorzugsweise als getrennt voneinander ausgebildete Schaltungsanordnungen ausgebildet sind. Die dritte Steuereinheit 3 ist im übrigen vorzugsweise als Mikroprozessor ausgebildet (gemäß der Anordnung nach Figur 2). Die vierte Steuereinheit 4 als analoger oder logischer Schaltkreis, vorzugsweise in integrierter Form. Dritte Steuereinheit 3 und vierte Steuereinheit 4 sind mit einem UND-Gatter 5 auf separatem Träger verbunden. Wird von der dritten Steuereinheit 3 ein genügend starker Aufprall erkannt, so liefert sie ein Signal a1 an das UND-Gatter 10 wobei, das Signal a1 bereits in für die Übertragung zwischen den Schnittstellen 103 bestimmter codierter Form vorliegt. Von der vierten Steuereinheit 4 wird lediglich ein Freigabesignal oder ein Sperrsignal in Form einer Eins bzw. Null an das UND-Gatter 104 geliefert, sofern von dem Beschleunigungssensor 6 eine ausreichend starke Beschleunigung erkannt wird. Dies hat insbesondere den Vorteil, daß eine defekte dritte Steuereinheit 3 mit geringer Wahrscheinlichkeit ein codiertes Auslösesignal an das UND-Gatter 104 liefert. Mit größerer Wahrscheinlichkeit wird eine defekte Steuereinheit 3 eine permanente logische Null oder eine permanente logische Eins liefern, die dann von der ersten Steuereinheit 1 der Zentralanordnung 10 aber nicht als Auslösemuster erkannt würde.

Seitens der Zentralanordnung 10 wird das codierte Signal a1 von der Schnittstelle 103 empfangen und zum einen zur ersten Steuereinheit 1, zum anderen zur zweiten Steuereinheit 2 übermittelt. In beiden Steuereinheiten 1 und 2 wird das Signal a1 unabhängig voneinander decodiert und ausgewertet. Bei Erkennen eines Auslösebefehls durch beide Steuereinheiten 1 und 2 werden durch die erste Steuereinheit 1 die beiden Leistungsschalter 71 und 72 durchgeschaltet und durch die zweite Steuereinheit 2 der dritte Leitungsschalter 81, so daß das Zündelement 100 gezündet wird. Die zweite Steuereinheit ist insbesondere als logische Schaltung, z. B in Form eines weiteren Mikroprozessors, eines Asics oder eines logischen Gattters ausgebildet. Durch die Trennung der Auslösepfade, begonnen bei den Beschleunigungssensoren 5 und 6 bis hin zu den Leistungsschaltern 71, 72 und 81 mit lediglich der Datenübertragungsleitung 102 als nicht redundant ausgebildete Baueinheit der Anordnung wird in vorteilhafter Weise eine Anordnung mit zielgerichtet eingesetzten redundanten Elementen geschaffen, durch die insbesondere eine Fehlauslösung bei zahlreichen Einzelfehlern in der Gesamtanordnung verhindert wird, und die die anhand Figur 1 erläuterten Vorteile aufweist.

Unabhängig von sonstigen Schaltungsanordnungen der vorgeschlagenen Anordnung sind bei Verwendung zweier Beschleunigungssensoren (Redundanz), die räumlich nahe beieinander und vorteilhafterweise auf demselben Träger angeordnet sind, diese derart anzuordnen bzw anzuschließen, daß der eine Sensor z.B. bei einem Seitenaufprall 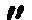 von rechts" ein Querbeschleunigungssignal mit positivem Vorzeichen, der andere Sensor bei demselben Aufprall ein Signal mit negativem Vorzeichen liefert. Bei einem Aufprall 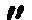 von links" liefern die Sensoren Signale mit umgekehrten aber ebenfalls entgegengesetzten Vorzeichen. Eine beispielsweise auf die Sensorzuleitungen einwirkende Störstrahlung kann ggf Signale erzeugen, die von den Steuerschaltung als Sensorsignale interpretiert werden. Diese eingetreuten Störsignale werden aufgrund dem vorteilhaften Anordnen bzw Anschließen der Sensoren erkannt und können von Sensorsignalen unterschieden werden, da die Störsignale gleiches Vorzeichen aufweisen. Vorzugsweise sind die baugleichen Sesnoren dabei um 180° gedreht zueinander auf dem Träger angeordnet. Diese Anordnung der Sensoren zueinander ist räumlich unabhängig von der räumlichen Anordnung der Sensoren im Fahrzeug, also unabhängig davon, ob die Sensoren seitlich oder zentral am Fahrzeug angeordnet sind.

In einer weiteren vorteilhaften Weiterbildung gemäß Figur 4 ist die erste Steuereinheit 1 über einen hochohmigen Widerstand R2 mit mehreren Kilo-Ohm mit einem Anschluß des dritten Leistungsschalters 81 verbunden. Parallel zum dritten Leistungsschalter 81 ist ein niederohmiger Widerstand R1 geschaltet. Die hochohmige Verbindung zwischen erster Steuereinheit 1 und drittem Leistungsschalter 81 dient lediglich zum Überprüfen, ob der dritte Leistungsschalter 81 geöffnet oder geschlossen ist. Auf diese Art kann die erste Steuereinheit 1 eine Plausibilitätsprüfung durchführen: Stellt sie fest, daß der dritte Leistungsschalter 81 geschlossen ist, aufgrund ihrer Auswertung des Beschleunigungssignals g1 jedoch kein Auslösewunsch vorliegt, so muß auf ein Fehlverhalten der zweiten Steuereinheit 2 geschlossen werden, sofern diese bei einer niedrigeren Schwelle als die erste Steuereinheit 1 betrieben wird. Damit kann optisch oder akustisch eine Warnung an den Fahrer ausgegeben werden. Sind erster und zweiter Leistungsschalter 71 und 72 durch die erste Steuereinheit 1 zu Testzwecken schaltbar, d. h. öffen- und schließbar, so muß diese Steuerwirkung der Steuereinheit 1 auf den dritten Leistungsschalter ausgeschlossen werden. Durch Leckströme ausgehend von der Steuereinheit 1 können über niederohmige Steuerleitungen zu den Leistungsschaltern 71 und 72 diese geschlossen werden. Eine solche Leckstromwirkung ist von der ersten Steuereinheit 1 auf den dritten Leistungsschalter 81 auszuschließen, da die Gefahr bestünde, daß alle drei Leistungsschalter leckstrombedingt schließen. Deswegen ist die Meßverbindung zwischen erster Steuereinheit 1 und drittem Leistungsschalter 81 hochohmig. Ein testbedingtes Durchsteuern und damit eine niederohmige Verbindung zwischen der ersten Steuereinheit und den Leistungsschaltern 71 und 72 ist allerdings erforderlich, um permanent die Funktionsfähigkeit der Leistungsschalter 71 und 72 zu überprüfen. Ebenso kann vorteilhafter Weise die zweite Steuereinheit 2 den ihr zugeordneten dritten Leistungsschalter 81 zu Testzwecken öffnen oder schließen.

Figur 5 zeigt die räumliche Plazierung einer erfindungsgemäßen Anordnung gemäß der Figuren 2 oder 3. Die Zentralanordnung 10 befindet sich etwa in Fahrzeugmitte, zwei Aufprallerkennungsanordnungen 20 sind zu beiden Seiten des Fahrzeugs bezüglich der Fahrzeuglängsachse A - A' angeordnet und über Leitungen mit der Zentralanordnung 10 verbunden. Zündleitungen führen von der Zentralanordnung 10 zu den ebenfalls seitlichen Fahrzeug angeordneten Rückhaltemitteln.

## Patentansprüche

1. Anordnung zum Steuern eines Rückhaltemittels, insbesondere für ein Kraftfahrzeug,
mit einem ein Beschleunigungssignal (g1) liefernden Beschleunigungssensor (5),
mit einer ersten Steuereinheit (1) zum Verarbeiten des Beschleunigungssignals (g1) oder eines vom Beschleunigungssignal (g1) abhängigen Signals (a1), und
mit einem mit einer Energiequelle (101) verbundenen Zündkreis, enthaltend in Serie zueinander angeordnet zumindest einen ersten elektrisch steuerbaren Leistungsschalter (71), ein dem Rückhaltemittel zugeordnetes Zündelement (100), und einen zweiten elektrisch steuerbaren Leistungsschalter (72), wobei die erste Steuereinheit (1) beide Leistungsschalter (71,72) steuert,
bei der der Zündkreis einen dritten elektrisch steuerbaren Leistungsschalter (81) aufweist,
bei der eine zweite Steuereinheit (2) vorgesehen ist, die beschleunigungsabhängig den dritten Leistungsschalter (81) steuert, wobei nur bei entsprechender Durchsteuerung aller drei steuerbarer Leistungsschalter (71,72,81) dem Zündelement (100) Energie aus der Energiequelle (101) zugeführt wird, **dadurch gekennzeichnet**,
daß der erste und der zweite Leistungsschalter (71,72) einen gemeinsamen Träger (7) aufweisen, und daß der dritte Leistungsschalter (81) nicht auf diesem Träger (7) angeordnet ist.

2. Anordnung nach Anspruch 1, dadurch gekennzeichnet, daß ein integrierter Schaltkreis den ersten und zweiten Leistungsschalter (71,72) enthält.

3. Anordnung nach Anspruch 1, dadurch gekennzeichnet, daß die zweite Steuereinheit (2) als Schaltungsanordnung getrennt von der ersten Steuereinheit (1) ausgebildet ist.

4. Anordnung nach Anspruch 3, dadurch gekennzeichnet, daß ein weiterer integrierter Schaltkreis die zweite Steuereinheit (2) und den dritten Leistungsschalter (81) enthält.

5. Anordnung nach Anspruch 1, dadurch gekennzeichnet, daß das Beschleunigungssignal (g1) oder ein von dem Beschleunigungssignal (g1) abhängiges Signal (a1) in der zweiten Steuereinheit (2) verarbeitet wird.

6. Anordnung nach Anspruch 1, dadurch gekennzeichnet, daß ein Beschleunigungssignal (g2) eines weiteren Beschleunigungssensors (6) oder ein von dem weiteren Beschleunigungssignal (g2) abhängiges Signal (a2) in der zweiten Steuereinheit (2) verarbeitet wird.

7. Anordnung nach Anspruch 1, dadurch gekennzeichnet, daß eine Zentralanordnung (10) und eine Aufprallerkennungsanordnung (20) vorgesehen sind, wobei die Zentralanordnung (10) und die Aufprallerkennungsanordnung (20) räumlich voneinander getrennt angeordnet und über ein Mittel (102) zur codierten Datenübertragung miteinander verbunden sind, daß die erste und die zweite Steuereinheit (1,2) der Zentralanordnung (10) zugeordnet sind, und daß der Beschleunigungssensor (5) und eine das Beschleunigungssignal (g1) verarbeitende dritte Steuereinheit (3) der Aufprallerkennungsanordnung (20) zugeordnet sind.

8. Anordnung nach den Ansprüchen 6 und 7, dadurch gekennzeichnet, daß der weitere Beschleunigungssensor (6) der Zentralanordnung (10) zugeordnet ist.

9. Anordnung nach den Ansprüchen 6 und 7, dadurch gekennzeichnet, daß der weitere Beschleunigungssensor (6) der Aufprallerkennungsanordnung (20) zugeordnet ist.

10. Anordnung nach Anspruch 8, dadurch gekennzeichnet, daß ein von der Aufprallerkennungsanordnung (20) über das Datenübertragungsmittel (102) zur Zentralanordnung (10) übermitteltes Signal (a1) der ersten Steuereinheit (1) zugeführt und dort ausgewertet wird.

11. Anordnung nach Anspruch 9, dadurch gekennzeichnet, daß ein von der Aufprallerkennungsanordnung (20) über das Datenübertragungsmittel (102) zur Zentralanordnung (10) übermitteltes Signal (a1,a2) der ersten und der zweiten Steuereinheit (1,2) zugeführt und dort ausgewertet wird.

12. Anordnung nach Anspruch 9, dadurch gekennzeichnet, daß die Aufprallerkennungsanordnung (20) eine vierte Steuereinheit (4) aufweist, in der das weitere Beschleunigungssignal (g2) verarbeitet wird, und daß die dritte und die vierte Steuereinheit (3,4) voneinander getrennte Schaltungsanordnungen aufweisen.

13. Anordnung nach Anspruch 1, dadurch gekennzeichnet, daß der Beschleunigungssensor (5) eine Querbeschleunigung des Fahrzeugs aufnimmt.

14. Anordnung nach Anspruch 7 und 13, dadurch gekennzeichnet, daß die Aufprallerkennungsanordnung (20) seitlich im Fahrzeug und die Zentralanordnung (10) zentral im Fahrzeug angeordnet ist.

15. Anordnung nach Anspruch 1, dadurch gekennzeichnet, daß die erste Steuereinheit (1) über einen hochohmigen Widerstand (R2) mit dem dritten Leistungsschalter (3) verbunden ist.

## Claims

1. Arrangement for controlling a restraining means, in particular for a motor vehicle,
having an acceleration sensor (5) which supplies an acceleration signal (g1),
having a first control unit (1) for processing the acceleration signal (g1) or a signal (a1) which is dependent on the acceleration signal (g1), and
having a firing circuit which is connected to an energy source (101), containing, arranged in series with one another, at least a first electrically controllable circuit breaker (71), a firing element (100) assigned to the restraining means, and a second electrically controllable circuit breaker (72), the first control unit (1) controlling both circuit breakers (71, 72),
in which the firing circuit has a third electrically controllable circuit breaker (81),
in which a second control unit (2) is provided which controls the third circuit breaker (81) as a function of the acceleration, energy being fed from the energy source (101) to the firing element (100) only when all three controllable circuit breakers (71, 72, 81) are appropriately switched on, characterized
in that the first and second circuit breakers (71, 72) have a common carrier (7), and in that the third circuit breaker (81) is not arranged on this carrier (7).

2. Arrangement according to Claim 1, characterized in that an integrated circuit contains the first and second circuit breakers (71, 72).

3. Arrangement according to claim 1, characterized in that the second control unit (2) is embodied as a circuit arrangement separated from the first control unit (1).

4. Arrangement according to Claim 3, characterized in that a further integrated circuit contains the second control unit (2) and the third circuit breaker (81).

5. Arrangement according to Claim 1, characterized in that the acceleration signal (g1), or a signal (a1) which is dependent on the acceleration signal (g1), is processed in the second control unit (2).

6. Arrangement according to Claim 1, characterized in that an acceleration signal (g2) of a further acceleration sensor (6), or a signal (a2) which is dependent on the further acceleration signal (g2), is processed in the second control unit (2).

7. Arrangement according to Claim 1, characterized in that a central arrangement (10) and an impact detection arrangement (20) are provided, the central arrangement (10) and the impact detection arrangement (20) being arranged spatially separated from one another and being connected to one another via a means (102) for the coded transmission of data, in that the first and second control units (1, 2) are assigned to the central arrangement (10), and in that the acceleration sensor (5) and a third control unit (3) which processes the acceleration signal (g1) are assigned to the impact detection arrangement (20).

8. Arrangement according to Claims 6 and 7, characterized in that the further acceleration sensor (6) is assigned to the central arrangement (10).

9. Arrangement according to Claims 6 and 7, characterized in that the further acceleration sensor (6) is assigned to the impact detection arrangement (20).

10. Arrangement according to Claim 8, characterized in that a signal (a1) which is conveyed from the impact detection arrangement (20) to the central arrangement (10) via the data transmission means (102) is fed to the first control unit (1) and evaluated there.

11. Arrangement according to Claim 9, characterized in that a signal (a1, a2) which is conveyed from the impact detection arrangement (20) to the central arrangement (10) via the data transmission means (102) is fed to the first and second control units (1, 2) and evaluated there.

12. Arrangement according to Claim 9, characterized in that the impact detection arrangement (20) has a fourth control unit (4) in which the further acceleration signal (g2) is processed, and in that the third and fourth control units (3, 4) have circuit arrangements which are separated from one another.

13. Arrangement according to Claim 1, characterized in that the acceleration sensor (5) senses a transversal acceleration of the vehicle.

14. Arrangement according to Claims 7 and 13, characterized in that the impact detection arrangement (20) is arranged laterally in the vehicle, and the central arrangement (10) is arranged centrally in the vehicle.

15. Arrangement according to Claim 1, characterized in that the first control unit (1) is connected to the third circuit breaker (3) via a high-impedance resistor (R2).

## Revendications

1. Agencement de commande d'un moyen de retenue, notamment pour véhicule automobile, comprenant
un capteur d'accélération (5), délivrant un signal d'accélération (g1),
une première unité de commande (1), servant à traiter le signal d'accélération (g1) ou un signal (a1) dépendant du signal d'accélération (g1), et
un circuit d'amorçage relié à une source d'énergie (101) et contenant, disposés en série l'un par rapport à l'autre, au moins un premier interrupteur de puissance (71) à commande électrique, un élément d'amorçage (100), associé au moyen de retenue, et un deuxième interrupteur de puissance (72) à commande électrique, la première unité de commande (1) commandant les deux interrupteurs de puissance (71, 72),
dans lequel le circuit d'amorçage comprend un troisième interrupteur de puissance (81) à commande électrique et
dans lequel il est prévu une deuxième unité de commande (2) qui commande le troisième interrupteur de puissance (81) d'une manière dépendant de l'accélération, tandis que ce n'est que lors d'une commutation appropriée de l'ensemble des trois interrupteurs de puissance (71, 72, 81) à commande électrique que de l'énergie est envoyée à l'élément d'amorçage (100) à partir de la source d'énergie (101), caractérisé en ce que le premier et le deuxième interrupteurs de puissance (71, 72) comportent un support (7) commun et en ce que le troisième interrupteur de puissance (81) n'est pas disposé sur ce support (7).

2. Agencement suivant la revendication 1, caractérisé en ce qu'un circuit intégré contient les premier et deuxième interrupteurs de puissance (71, 72).

3. Agencement suivant la revendication 1, caractérisé en ce que la deuxième unité de commande (2) est réalisée, sous forme d'un agencement de circuit, d'une manière séparée par rapport à la première unité de commande (1).

4. Agencement suivant la revendication 3, caractérisé en ce qu'un second circuit intégré contient la deuxième unité de commande (2) et le troisième interrupteur de puissance (81).

5. Agencement suivant la revendication 1, caractérisé en ce que le signal d'accélération (g1) ou un signal (a1) dépendant du signal d'accélération (g1) est traité dans la deuxième unité de commande (2).

6. Agencement suivant la revendication 1, caractérisé en ce qu'un signal d'accélération (g2) d'un second capteur d'accélération (6) ou un signal (a2) dépendant du second signal d'accélération (g2) est traité dans la deuxième unité de commande (2).

7. Agencement suivant la revendication 1, caractérisé en ce qu'il est prévu un agencement central (10) et un agencement de reconnaissance de choc (20), l'agencement central (10) et l'agencement de reconnaissance de choc (20) étant disposés dans l'espace d'une manière séparée l'un de l'autre et étant reliés l'un à l'autre par l'intermédiaire d'un moyen (102) servant à la transmission codée de données, en ce que la première et la deuxième unités de commande (1, 2) sont associées à l'agencement central (10) et en ce que le capteur d'accélération (5) et une troisième unité de commande (3) traitant le signal d'accélération (g1) sont associés à l' agencement de reconnaissance de choc (20).

8. Agencement suivant les revendications 6 et 7, caractérisé en ce que le second capteur d'accélération (6) est associé à l'agencement central (10).

9. Agencement suivant les revendications 6 et 7, caractérisé en ce que le second capteur d'accélération (6) est associé à l'agencement de reconnaissance de choc (20).

10. Agencement suivant la revendication 8, caractérisé en ce qu'un signal (a1) transmis de l'agencement de reconnaissance de choc (20) à l'agencement central (10) par l'intermédiaire du moyen de transmission de données (102) est envoyé à la première unité de commande (1) et est analysé dans celle-ci.

11. Agencement suivant la revendication 9, caractérisé en ce qu'un signal (a1, a2) transmis de l'agencement de reconnaissance de choc (20) à l'agencement central (10) par l'intermédiaire du moyen de transmission de données (102) est envoyé à la première et à la deuxième unités de commande (1, 2) et est analysé dans celles-ci.

12. Agencement suivant la revendication 9, caractérisé en ce que l'agencement de reconnaissance de choc (20) comprend une quatrième unité de commande (4) dans laquelle le second signal d'accélération (g2) est traité et en ce que la troisième et la quatrième unités de commande (3, 4) comportent des agencements de circuit séparés l'un de l'autre.

13. Agencement suivant la revendication 1, caractérisé en ce que le capteur d'accélération (5) détecte une accélération transversale du véhicule.

14. Agencement suivant les revendications 7 et 13, caractérisé en ce que l'agencement de reconnaissance de choc (20) est disposé sur le côté dans le véhicule et l'agencement central (10) est disposé en position centrale dans le véhicule.

15. Agencement suivant la revendication 1, caractérisé en ce que la première unité de commande (1) est reliée au troisième interrupteur de puissance (3) à travers une résistance (R2) à valeur ohmique élevée.
